(19) Europäisches Patentamt / European Patent Office / Office européen des brevets

(11) **EP 4 209 367 B1**

(12) **EUROPÄISCHE PATENTSCHRIFT**

(45) Veröffentlichungstag und Bekanntmachung des Hinweises auf die Patenterteilung:
**21.08.2024   Patentblatt 2024/34**

(21) Anmeldenummer: **22211841.6**

(22) Anmeldetag: **07.12.2022**

(51) Internationale Patentklassifikation (IPC):
**B60G 17/005** (2006.01)        **B60G 17/052** (2006.01)

(52) Gemeinsame Patentklassifikation (CPC):
**B60G 17/0525; B60G 17/005;** B60G 2202/152;
B60G 2204/46; B60G 2300/04; B60G 2400/204;
B60G 2400/252; B60G 2500/30; B60G 2600/02

(54) **VERFAHREN ZUM AUSLÖSEN EINES RTR-VENTILS, STEUERGERÄT, DRUCKLUFTSYSTEM UND ANHÄNGEFAHRZEUG**

METHOD FOR TRIGGERING AN RTR VALVE, CONTROL DEVICE, COMPRESSED AIR SYSTEM SYSTEM AND TRAILER

PROCÉDÉ DE DÉCLENCHEMENT D'UNE SOUPAPE RTR, APPAREIL DE COMMANDE, SYSTÈME D'AIR COMPRIMÉ ET REMORQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.01.2022   DE 102022100288**

(43) Veröffentlichungstag der Anmeldung:
**12.07.2023   Patentblatt 2023/28**

(73) Patentinhaber: **ZF CV Systems Europe BV
1170 Brüssel (BE)**

(72) Erfinder:
• **BRUNS, Peter
  30163 Hannover (DE)**
• **GERLACH, Steffen
  30169 Hannover (DE)**

(74) Vertreter: **Ohlendorf, Henrike
ZF CV Systems Hannover GmbH
Am Lindener Hafen 21
30453 Hannover (DE)**

(56) Entgegenhaltungen:
**EP-B1- 3 643 543     DE-A1- 102010 011 433**

**Beschreibung**

Die Erfindung betrifft ein Verfahren zum elektropneumatischen Auslösen eines manuell betätigbaren RtR-Ventils in einem Anhängefahrzeug mit pneumatischer Bremsanlage und Luftfedersystem und mit getrennten Vorratsbehältern für die Bremsanlage und für das Luftfedersystem, wobei

- das RtR-Ventil durch das Auslösen aus einer Nicht-Fahrstellung in eine Fahrstellung zurückkehrt,
- Druckluft aus dem Vorratsbehälter für die Bremsanlage nur nach Erreichen eines Überströmdrucks in den Vorratsbehälter für das Luftfedersystem strömt und nur der Vorratsbehälter für das Luftfedersystem Druckluft zum Auslösen des RtR-Ventils zur Verfügung stellt,
- und das RtR-Ventil zum Auslösen desselben durch einen elektrischen Puls angesteuert wird, wenn das Fahrzeug bei zunehmender Geschwindigkeit eine Mindestgeschwindigkeit erreicht hat.

Daneben betrifft die Erfindung ein Steuergerät, ein Druckluftsystem und ein Anhängefahrzeug.

Anhängefahrzeuge mit pneumatischer Bremsanlage und Luftfedersystem können ein sogenanntes RtR-Ventil aufweisen. Dieses wird manuell betätigt und ist zum pneumatischen Heben oder Senken eines Fahrzeugaufbaus relativ zum Fahrwerk vorgesehen. Vorzugsweise kann das RtR-Ventil fünf Stellungen einnehmen, nämlich

Heben,
Stopp,
Fahrstellung,
Stopp,
Senken.

Entsprechend ist ein von einem Bediener bewegbarer Stellhebel zwischen diesen Positionen hin- und herbewegbar. Mit dem Heben oder Senken soll die Höhe des Fahrzeugaufbaus an äußere Gegebenheiten angepasst werden, beispielsweise an ein Niveau einer Laderampe oder einen Bahntransport, welcher mit abgesenktem Fahrzeugaufbau durchzuführen ist.

Während der Fahrt soll das RtR-Ventil in Fahrstellung stehen. Nur in Fahrstellung ermöglicht das RtR-Ventil einen automatischen Niveauausgleich durch ein üblicherweise vorgesehenes Luftfederventil.

Das RtR-Ventil kann in den vier Positionen außerhalb der Fahrstellung verharren. Es muss deshalb sichergestellt sein, dass eine bedingungsabhängige Rückkehr in die Fahrstellung möglich ist. Zu diesem Zweck ist das RtR-Ventil in besonderer Weise ausgebildet und von einem Steuergerät ansteuerbar. Nach Überschreiten einer bestimmten Mindestgeschwindigkeit des Anhängefahrzeugs schaltet das RtR-Ventil automatisch in die Fahrstellung. Aus diesem Zweck ergibt sich der Name des Ventils. RtR bedeutet "Return to Ride" oder "Reset to Ride".

Bestandteil des RtR-Ventils ist eine Rastvorrichtung für den Stellhebel. Der Stellhebel ist außerhalb der Fahrstellung mit einer Rückstellkraft belastet. Die Rastvorrichtung hält den Stellhebel derart in Position, dass der Stellhebel zwar noch vom Bediener verstellbar ist, nicht jedoch selbsttätig in die Fahrstellung zurückkehren kann. Für die selbsttätige Rückkehr in die Fahrstellung muss die Rastvorrichtung gelöst werden, was hier als Auslösen des RtR-Ventils bezeichnet wird. Das Auslösen erfolgt elektropneumatisch nach Überschreiten der Mindestgeschwindigkeit. Über ein durch einen elektrischen Puls ansteuerbares Magnetventil wird die Zufuhr von Druckluft zu einem Stellzylinder der Rastvorrichtung gesteuert. Sobald Druckluft zugeführt wird, wird die Wirkung der Rastvorrichtung aufgehoben und das RtR-Ventil wird ausgelöst. Der Stellhebel kann kehrt selbsttätig in die Fahrstellung zurück, sofern zuvor eine Nicht-Fahrstellung vorlag.

Ein RtR-Ventil mit den zuvor genannten Funktionen ist beispielsweise in Fig. 1 der EP 3 643 543 B1 offenbart. Das RtR-Ventil ist in der zugehörigen Beschreibung als "valve device 1" bezeichnet, die Rastvorrichtung als "locking valve 32" und "return-to-ride valve 33".

Die Funktion der Rastvorrichtung im Zusammenhang mit einem RtR-Ventil ist auch in Fig. 2 und 3 der DE 10 2010 011 433 A1 offenbart. Das RtR-Ventil ist in der zugehörigen Beschreibung als "Ventileinrichtung 6" bezeichnet, die Rastvorrichtung als "Rasteinrichtung 30".

Aus Sicherheitsgründen weist das Anhängefahrzeug zwei Vorratsbehälter für Druckluft auf, nämlich einen Vorratsbehälter für die Bremsanlage und einen Vorratsbehälter für das Luftfedersystem oder sonstige Nebenverbraucher. Bei entleerten Luftbehältern wird über eine Vorratsleitung vom Zugfahrzeug zunächst der Luftbehälter für die Bremsanlage befüllt. Sobald dieser einen Überströmdruck erreicht hat, wird auch der Luftbehälter für das Luftfedersystem befüllt.

Wenn das Anhängefahrzeug abgestellt ist, das RtR-Ventil sich nicht in Fahrstellung befindet und zumindest der Vorratsbehälter für die Luftfederung drucklos ist, können beim Anfahren unerwünschte oder sogar gefährliche Situationen auftreten. Das Anhängefahrzeug wird an das Zugfahrzeug angeschlossen und in Bewegung gesetzt. Bei Überschreiten einer Mindestgeschwindigkeit wird das RtR-Ventil zum Auslösen von einem Steuergerät mit einem elektrischen Puls kurz angesteuert. Mangels Druck im Vorratsbehälter wird der Rastvorrichtung im RtR-Ventil aber keine Druckluft zum Entriegeln zugeführt. Das RtR-Ventil wird dann nicht ausgelöst und kehrt nicht in seine Fahrstellung zurück. Der Fahrzeugaufbau verbleibt beispielsweise in maximal angehobener oder maximal abgesenkter Position.

Ausgehend von der zuvor beschriebenen Konfiguration ist es Aufgabe der vorliegenden Erfindung, das Einnehmen der Fahrstellung sicherzustellen.

Zur Lösung der Aufgabe weist das erfindungsgemäße Verfahren die Merkmale des Anspruchs 1 auf. Das RtR-Ventil wird in Abhängigkeit von der Mindestgeschwindigkeit und von einem Vorratsdruck in der Bremsanlage ausgelöst. Der Vorratsdruck in der Bremsanlage ist zugleich der Druck im Vorratsbehälter der Bremsanlage und wird ohnehin aus anderen Gründen überwacht und liegt somit vor. Ist der Vorratsdruck in der Bremsanlage über einen Zeitraum stabil oder relativ hoch, kann von einem zum Auslösen ausreichenden Druck im Vorratsbehälter für das Luftfedersystem ausgegangen werden. Die Mindestgeschwindigkeit beträgt vorzugsweise 10 km/h bis 30 km/h, insbesondere 30 km/h.

Nach einem weiteren Gedanken der Erfindung wird der elektrische Puls wiederholt, bis der Vorratsdruck in der Bremsanlage einen definierten Grenzwert überschreitet. Der Vorratsdruck in der Bremsanlage wird mit dem definierten Grenzwert verglichen. Durch die Wiederholung des Pulses wird das Auslösen sichergestellt. Zugleich kann eine zu starke Erwärmung von beteiligten elektromagnetischen Bauteilen vermieden werden. Nach Überschreiten des Grenzwertes werden die angegebenen Verfahrensschritte ausgeführt. Der definierte Grenzwert ist in der Praxis so zu wählen, dass parallel zum Vorratsbehälter für die Bremsanlage auch der Vorratsbehälter für das Luftfedersystem einen Mindestdruck aufweist, wobei die Befüllung des Vorratsbehälters für das Luftfedersystem noch nicht abgeschlossen sein muss.

Nach einem weiteren Gedanken der Erfindung wird der elektrische Puls aufrechterhalten, bis der Vorratsdruck in der Bremsanlage einen definierten Grenzwert überschreitet. Die Aufrechterhaltung des Pulses stellt ebenfalls das Auslösen sicher. Zugleich erfolgt das Auslösen unmittelbar nach Erfüllung der Bedingung und wird nicht durch eine Pause zwischen Pulsen verzögert.

Nach einem weiteren Gedanken der Erfindung wird das RtR-Ventil erst dann durch den elektrischen Puls angesteuert, wenn zusätzlich zum Erreichen der Mindestgeschwindigkeit der Vorratsdruck in der Bremsanlage einen definierten Grenzwert überschreitet. Das Auslösen erfolgt ohne Verzögerung, der elektrische Puls kann relativ kurz sein und muss nicht wiederholt werden.

Nach einem weiteren Gedanken der Erfindung wird der definierte Grenzwert aus einer Druckdifferenz zum Überstromdruck berechnet, mit

$$\text{Grenzwert} = \text{Überstromdruck} + \text{Druckdifferenz.}$$

Durch die Bezugnahme auf den Überstromdruck kann das Auslösen des RtR-Ventils besonders vorteilhaft geregelt werden. Der Überstromdruck ist ein Parameter der Kombination aus Bremsanlage und Luftfedersystem und daher bekannt. Die Druckdifferenz wird zur Berechnung des Grenzwertes auf den Überströmdruck aufgeschlagen und kann empirisch oder aus Charakteristika des RtR-Ventils bestimmt werden.

Nach einem weiteren Gedanken der Erfindung beträgt die Druckdifferenz 0,2 bar bis 1,3 bar, insbesondere 0,4 bar bis 1 bar, insbesondere 0,5 bar. Die angegebenen Bereiche und Zahlenwerte haben sich in Versuchen als vorteilhaft herausgestellt. Auch werden dadurch die Eigenschaften der Rastvorrichtung im RtR-Ventil berücksichtigt, einschließlich von Rückstell- oder Haltekräften, welche der pneumatischen Entriegelung der Rastvorrichtung entgegenwirken.

Nach einem weiteren Gedanken der Erfindung wird der elektrische Puls mit einem Pulsabstand von 10 Sekunden bis 20 Sekunden wiederholt, insbesondere mit einem Pulsabstand von 15 Sekunden. Durch einen ausreichend großen Pulsabstand wird eine übermäßige Erwärmung eines mit dem elektrischen Puls beaufschlagten Magnetventils vermieden. Als Pulsabstand wird der Zeitraum zwischen dem Beginn eines bestimmten Pulses und dem Beginn des daran anschließenden Pulses verstanden.

Als Pause zwischen zwei elektrischen Pulsen sind insbesondere 5 Sekunden bis 15 Sekunden vorgesehen, insbesondere 10 Sekunden. Auch dies vermeidet eine übermäßige Erwärmung der beteiligten Bauteile.

Nach einem weiteren Gedanken der Erfindung weist der elektrische Puls eine Pulsdauer von 2 Sekunden bis 10 Sekunden auf, insbesondere eine Pulsdauer von 5 Sekunden. Die Pulsdauer soll ausreichend lang sein, um das RtR-Ventil sicher auslösen zu können. Zugleich soll eine übermäßige Erwärmung des mit dem elektrischen Puls angesteuerten Magnetventils vermieden werden. Gegenstand der Erfindung ist auch ein Steuergerät mit den Merkmalen des Anspruchs 13, einschließlich eines Computerprogramms zur Durchführung des erfindungsgemäßen Verfahrens.

Ebenfalls Gegenstand der Erfindung ist ein Druckluftsystem mit den Merkmalen des Anspruchs 14, einschließlich eines erfindungsgemäßen Steuergeräts. Schließlich ist Gegenstand der Erfindung auch ein Anhängefahrzeug mit den Merkmalen des Anspruchs 15.

Weitere Merkmale der Erfindung ergeben sich aus der Beschreibung im Übrigen und aus den Patentansprüchen. Vorteilhafte Ausführungsbeispiele der Erfindung werden nachfolgend anhand von Zeichnungen näher erläutert. Es zeigen:

Fig. 1    ein Luftfedersystem für ein Anhängefahrzeug mit pneumatischer Bremsanlage und RtR-Ventil,

Fig. 2    ein pneumatisches Schaltbild des RtR-Ventils,

Fig. 3    ein Diagramm zur Darstellung eines zeitlichen Verlaufs von Drücken in Vorratsbehältern für ein Bremssystem und das Luftfedersystem des Anhängefahrzeugs,

Fig. 4    ein Diagramm zur Darstellung einer Abfolge von elektrischen Pulsen,

Fig. 5    ein Diagramm entsprechend Fig. 4, hier zur Erläuterung von Pulsabstand und Pulsdauer.

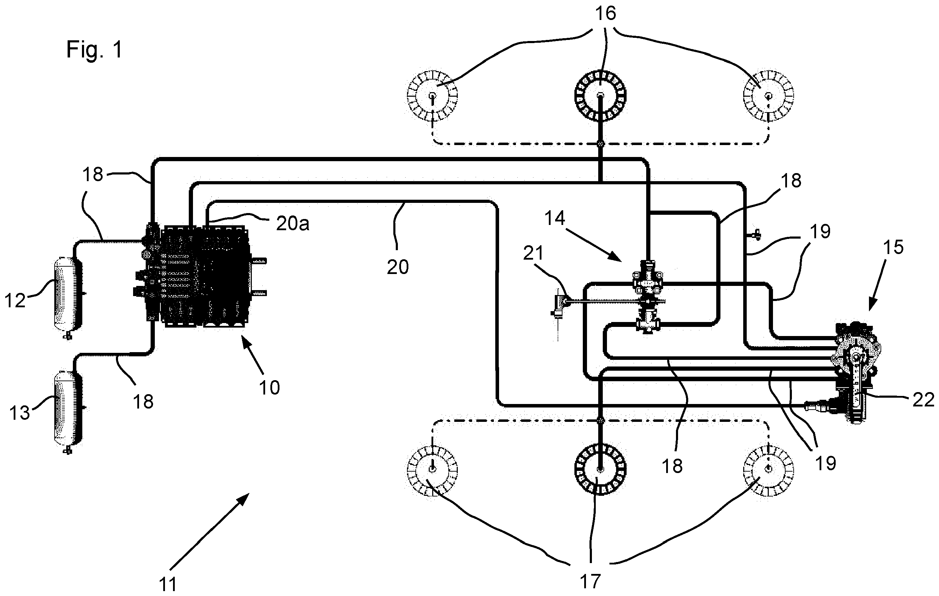

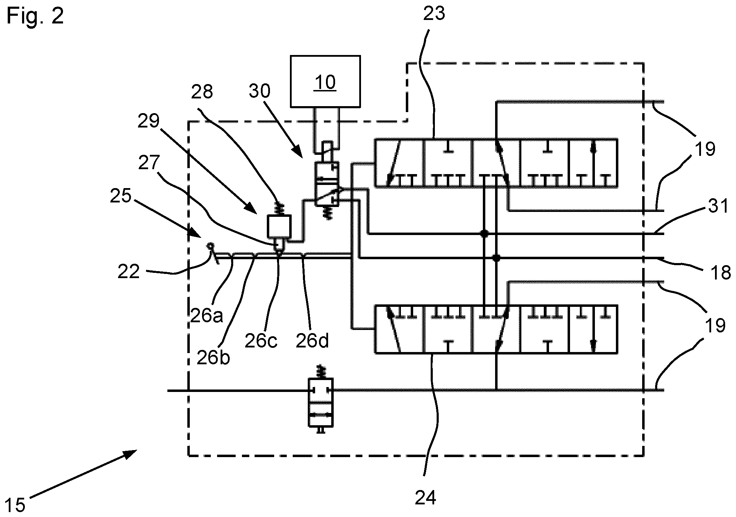

Die Fig. 1 und 2 zeigen sowohl den Stand der Technik, als auch die Erfindung, je nach Konfiguration eines elektronischen Steuergerätes 10 in einem Luftfedersystem 11.

In Fig. 1 ist das Luftfedersystem 11 für ein Anhängefahrzeug mit pneumatischer Bremsanlage und drei Achsen dargestellt. Bremsanlage und Achsen sind nicht im Detail gezeigt. Erkennbar sind ein Vorratsbehälter 12 für das Luftfedersystem, ein Vorratsbehälter 13 für die Bremsanlage, ein Luftfederventil 14, ein RtR-Ventil 15, Luftfederbälge 16 auf einer Fahrzeugseite und Luftfederbälge 17 auf einer anderen Fahrzeugseite, sowie pneumatische Leitungen 18, 19, eine elektrische Leitung 20 und ein elektrischer Ausgang 20a des Steuergerätes 10. Im Steuergerät 10 vorhanden, aber nicht gesondert dargestellt, ist ein Drucksensor zur Erfassung des Drucks im Vorratsbehälter 13 der Bremsanlage. Ebenfalls vorhanden, aber nicht extra dargestellt, sind Drehzahlsensoren, aus deren Signalen das Steuergerät 10 die Geschwindigkeit ermitteln kann. Alternativ kann das Steuergerät 10 ein Geschwindigkeitssignal über eine nicht dargestellte Leitung von einem Zugfahrzeug erhalten.

Über die pneumatischen Leitungen 18 wird Vorratsdruck aus dem Vorratsbehälter 12 bereitgestellt. Über die pneumatischen Leitungen 19 sind die Luftfederbälge 16, 17 mit dem RtR-Ventil 15 und darüber mittelbar mit dem Luftfederventil 14 verbunden.

Über das Luftfederventil 14 erfolgt in bekannter Weise eine automatische Niveauregulierung. In Fig. 1 ist hierzu ein Gestänge 21 eingezeichnet, welches einerseits mit dem Luftfederventil 14 und einem darin integrierten Höhensensor und andererseits mit einer nicht gezeigten Achse oder einem anderen Teil eines Fahrwerks verbunden ist.

Mit dem RtR-Ventil 15 kann eine Bedienungsperson in bekannter Weise manuell die Luftfederbälge 16, 17 belüften oder entlüften und so einen Fahrzeugaufbau relativ zum Fahrwerk heben oder senken. Dabei wird die Funktion des Luftfederventils 14 blockiert. Das RtR-Ventil 15 ist intern so konstruiert, dass ein in Fig. 1 gezeigter Stellhebel 22 in eine Stellung "Senken" bewegt werden und dort einrasten kann. Der Bediener kann den Stellhebel 22 in der Stellung "Senken" loslassen, während die Luftfederbälge 16, 17 weiter entlüftet werden, bis der Fahrzeugaufbau vollständig abgesenkt ist, beispielsweise für einen Bahntransport des Anhängefahrzeugs. Analog gilt dies für eine Stellung "Heben" des Stellhebels 22.

In Fig. 1 befindet sich der Stellhebel 22 in einer Fahrstellung. Zwischen der Fahrstellung und der Stellung "Senken" kann der Stellhebel 22 noch eine Stoppstellung einnehmen, in der die bis dahin abgesenkte Position des Fahrzeugaufbaus gehalten wird, bei weiterhin blockiertem Luftfederventil 14. Analog gilt dies für eine Stoppstellung zwischen der Fahrstellung und der Stellung "Heben".

Sobald das Anhängefahrzeug wieder bewegt wird, soll das RtR-Ventil 15 wieder seine Fahrstellung einnehmen, damit das Luftfederventil 14 nicht weiter blockiert wird. Um dies sicherzustellen, überwacht das Steuergerät 10 die Geschwindigkeit des Anhängefahrzeugs und steuert bei Erreichen einer zuvor festgelegten Mindestgeschwindigkeit einen elektrischen Puls E über den Ausgang 20a und die Leitung 20 an das RtR-Ventil 15 aus, welches daraufhin in die Fahrstellung zurückkehrt.

Das RtR-Ventil 15 weist intern in bekannter Weise für die Luftfederbälge 16, 17 jeweils eigene Mehrwegeventile 23, 24 auf, in diesem Fall 4/5-Wegeventile. Diese werden vom Stellhebel 22 verstellt. Bestandteil eines mit dem Stellhebel 22 verbundenen Verstellmechanismus 25 ist eine Rasteinrichtung 29 mit einem in Rastnuten 26a, 26b, 26c, 26d eintretenden Rastelement 27. Das Rastelement 27 ist durch eine Druckfeder 28 belastet und pneumatisch gegen die Kraft der Druckfeder 28 aus den Rastnuten 26a, 26b, 26c, 26d heraus anhebbar, sodass eine Entriegelung stattfindet. Hierzu ist die Rasteinrichtung 29 über ein Magnetventil 30 pneumatisch ansteuerbar. Das Magnetventil 30 erhält vom Steuergerät 10 den oben bereits genannten elektrischen Puls bei Überschreiten der Mindestgeschwindigkeit. Sobald das Rastelement 27 nicht mehr in einer der Rastnuten 26a, 26b, 26d steht, fährt der Stellhebel 22 aufgrund der Wirkung einer nicht gezeigten Rückstellfeder in die Fahrstellung mit der Rastnut 26c zurück. Dieser Vorgang wird hier als Auslösen des RtR-Ventils 15 bezeichnet.

Gemäß Fig. 2 kann die Rasteinrichtung 29 durch Verstellung des Magnetventils 30 wahlweise mit der Vorratsdruck führenden Leitung 18 oder einer Entlüftung 31 verbunden werden. Sobald Vorratsdruck anliegt, wird die Rasteinrichtung 29 entriegelt, bei Verbindung mit der Entlüftung 31 ist die Rasteinrichtung 29 wirksam.

Das in Fig. 2 gezeigte Schaltbild ist in sehr ähnlicher Form auch in Fig. 1 der EP 3 643 543 B1 mit zugehöriger Beschreibung offenbart. Zum besseren Verständnis und zur fakultativen Ergänzung der Offenbarung wird darauf Bezug genommen.

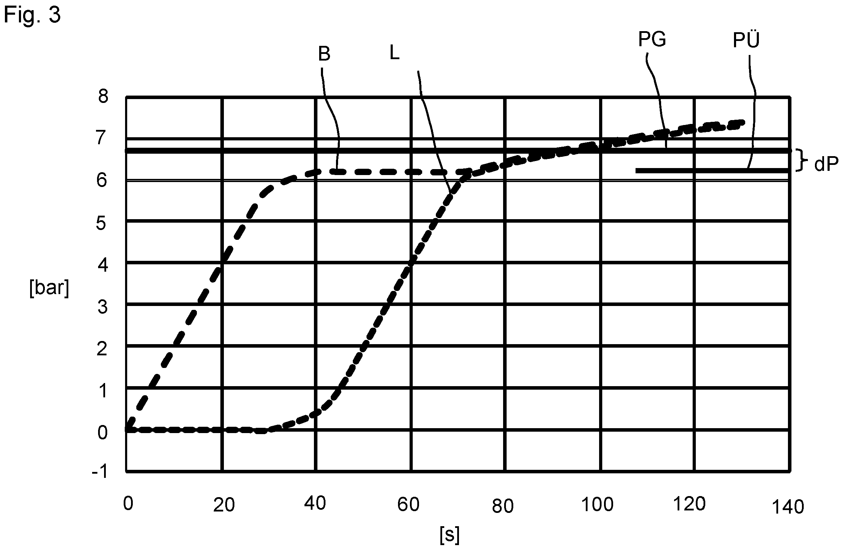

Die Funktion der Rasteinrichtung 29 mit pneumatischer Entriegelung des Rastelements 27 ist auch in der DE 10 2010 011 433 A1, dort Fig. 3 mit zugehöriger Beschreibung, dargestellt. Zum besseren Verständnis und zur fakultativen Ergänzung der Offenbarung wird auch darauf Bezug genommen.

In der beiliegenden Fig. 2 befindet sich der Stellhebel 22 in Fahrstellung, ebenso in Fig. 1. Entsprechend liegt das Rastelement 27 in einer zur Fahrstellung gehörenden Rastnut 26c. Hierzu links und rechts benachbart sind in Fig. 2 die Rastnuten 26b, 26d für Stoppstellungen eingezeichnet, ganz links die Rastnut 26a für die Stellung "Senken", genau wie in Fig. 1 der EP 3 643 543 B1. Eine Rastnut für die Stellung "Heben" ist nicht dargestellt, kann aber vorgesehen sein.

Das Steuergerät 10 steuert das Auslösen des RtR-Ventils 15 in besonderer Weise:

Zusätzlich zur Geschwindigkeit prüft das Steuergerät 10 den Vorratsdruck im Vorratsbehälter 13 für die Bremsanlage. Bei vollständig entleerten Vorratsbehältern 12, 13 werden diese über eine Vorratsleitung vom Zugfahrzeug nacheinander wieder befüllt. Verläufe der Vorratsdrücke sind in Fig. 3 dargestellt. Aus Sicherheitsgründen wird zunächst der Vorratsbehälter 13 für die Bremsanlage befüllt, siehe grob gestrichelte Kurve B. Erst wenn der Vorratsdruck im Vorratsbehälter 13 einen sogenannten Überstromdruck PÜ von beispielsweise 6,2 bar überschritten hat, wird auch der Vorratsbehälter 12 für das Luftfedersystem 11 befüllt, siehe feiner gestrichelte Kurve L. Nach einer gewissen Zeit, hier nach etwa 70 Sekunden ab Beginn der Befüllung des Vorratsbehälters 13, verlaufen die Drücke in den beiden Vorratsbehältern 12, 13 ansteigend nahezu gleich, bis zum Erreichen des vollen Drucks von 7,5 bar oder eines ähnlichen Drucks.

Die Entriegelung der Rasteinrichtung 29 erfolgt mit Hilfe des Drucks im Vorratsbehälter 12 des Luftfedersystems. Um sicherzustellen, dass für die Entriegelung ausreichend Druck im Vorratsbehälter 12 vorliegt, steuert das Steuergerät 10 den elektrischen Puls E mehrfach aus, bis der Vorratsdruck im Vorratsbehälter 13 der Bremsanlage einen Grenzwert PG überschreitet. Der Grenzwert PG berechnet sich aus dem Überströmdruck PÜ zuzüglich einer Druckdifferenz dP. Die Druckdifferenz dP beträgt vorzugsweise 0,5 bar, kann aber von diesem Wert auch nach oben oder unten abweichen und liegt vorzugsweise zwischen 0,2 bar und 1,3 bar. Um die gestrichelte Kurve B nicht zu überdecken, ist rechts oben in Fig 3 für den Überströmdruck PÜ nur eine kurze Linie eingezeichnet. Eine zeitliche Begrenzung oder Veränderung des Überströmdrucks PÜ soll damit nicht dargestellt werden.

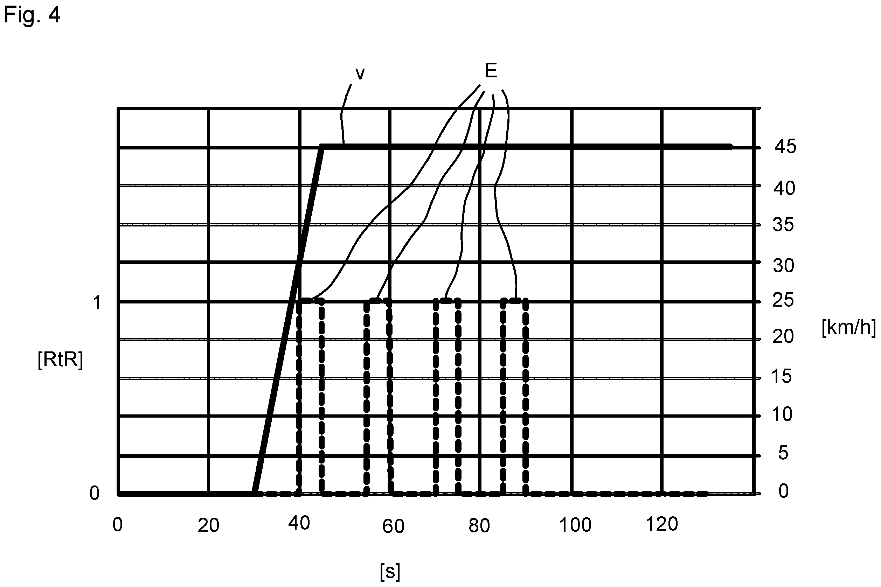

Der elektrische Puls E kann zeitlich begrenzt und wiederholt ausgesteuert werden, siehe Fig. 4. Mit der durchgezogenen Linie v ist die Geschwindigkeit des Anhängefahrzeugs angegeben, während die gestrichelte Linie E die elektrischen Pulse darstellt. Gemäß Fig. 4 werden nacheinander vier elektrische Pulse E ausgesteuert, ab Beginn der Mindestgeschwindigkeit von 30 km/h und jeweils mit kleinen Pausen zwischen den elektrischen Pulsen E.

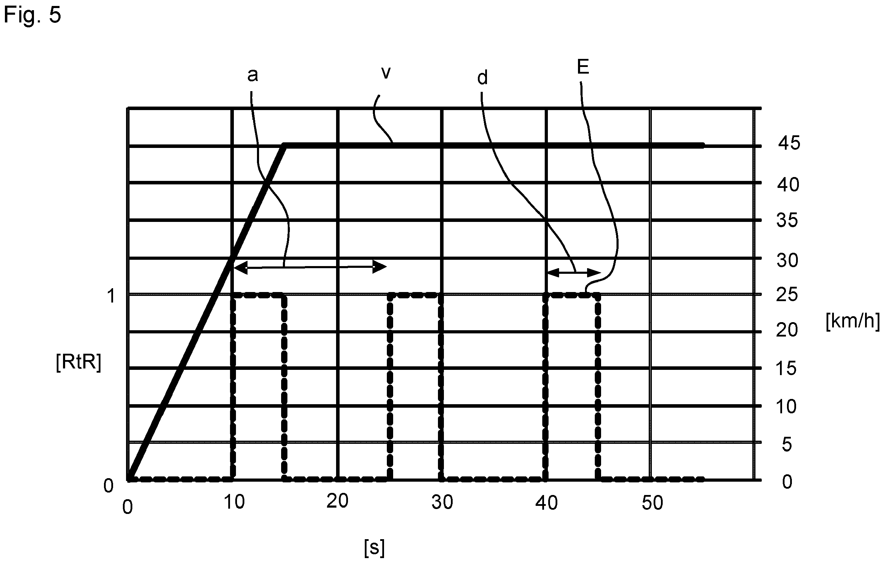

Pulsabstand a und Pulsdauer d sind in Fig. 5 dargestellt. Vorzugsweise beträgt der Pulsabstand als Zeitraum zwischen dem Beginn zweier aufeinanderfolgender Pulse E 15 Sekunden, bei einer Pulsdauer von 5 Sekunden. Entsprechend betragen die Pausen jeweils 10 Sekunden. Der letzte Puls E wird ausgesteuert, solange der Druck B den Grenzwert PG noch nicht überschritten hat, im Beispiel der Fig. 4 bei etwa 85 Sekunden nach Beginn der Befüllung der Vorratsbehälter 12, 13. Sobald der Grenzwert PG überschritten ist, wird kein weiterer Puls E ausgesteuert.

Gemäß einem nicht dargestellten Ausführungsbeispiel kann der erste ausgesteuerte elektrische Puls E solange aufrechterhalten werden, bis der Grenzwert PG überschritten ist.

Gemäß einem ebenfalls nicht dargestellten Ausführungsbeispiel wird der elektrische Puls E erst dann ausgesteuert, wenn der Grenzwert PG überschritten ist, wiederum in Verbindung mit dem Überschreiten der Mindestgeschwindigkeit.

Durch die Berücksichtigung des Grenzwertes PG ist sichergestellt, dass das RtR-Ventil 15 auch nach einer vorangegangenen vollständigen Entleerung der Vorratsbehälter 12, 13 auslöst.

Bezugszeichenliste als Teil der Beschreibung

10 Steuergerät
11 Luftfedersystem
12 Vorratsbehälter Luftfederung
13 Vorratsbehälter Bremsanlage
14 Luftfederventil
15 RtR-Ventil
16 Luftfederbälge
17 Luftfederbälge
18 pneumatische Leitungen
19 pneumatische Leitungen
20 elektrische Leitungen
20a Anschluss
21 Gestänge
22 Stellhebel
23 Mehrwegeventil

24 Mehrwegeventil
25 Verstellmechanismus
26a Rastnut
26b Rastnut
26c Rastnut
26d Rastnut
27 Rastelement
28 Druckfeder
29 Rasteinrichtung
30 Magnetventil
31 Entlüftung
a Pulsabstand
d Pulsdauer
dP Druckdifferenz
v Geschwindigkeit
B Druck im Vorratsbehälter 13
E elektrischer Puls
L Druck im Vorratsbehälter 12
PG Grenzwert
PÜ Überströmdruck

**Patentansprüche**

1. Verfahren zum elektropneumatischen Auslösen eines manuell betätigbaren RtR-Ventils (15) in einem Anhängefahrzeug mit pneumatischer Bremsanlage und Luftfedersystem (11), wobei

   - das RtR-Ventil (15) durch das Auslösen aus einer Nicht-Fahrstellung in eine Fahrstellung zurückkehrt,
   - und das RtR-Ventil (15) zum Auslösen desselben durch einen elektrischen Puls (E) angesteuert wird, wenn das Fahrzeug bei zunehmender Geschwindigkeit eine Mindestgeschwindigkeit erreicht hat,

   **dadurch gekennzeichnet, dass** das Anhängerfahrzeug getrennte Vorratsbehälter (12, 13) für die Bremsanlage und für das Luftfedersystem umfasst, dass Druckluft aus dem Vorratsbehälter (13) für die Bremsanlage nur nach Erreichen eines Überströmdrucks in den Vorratsbehälter (12) des Luftfedersystems (11) strömt und nur der Vorratsbehälter (12) des Luftfedersystems (11) Druckluft zum Auslösen des RtR-Ventils (15) zur Verfügung stellt, und dass das RtR-Ventil in Abhängigkeit von der Mindestgeschwindigkeit und von einem Vorratsdruck (B) in der Bremsanlage ausgelöst wird.

2. Verfahren nach Anspruch 1, **dadurch gekennzeichnet, dass** der elektrische Puls (E) wiederholt wird, bis der Vorratsdruck (B) in der Bremsanlage einen definierten Grenzwert (PG) überschreitet.

3. Verfahren nach Anspruch 1, **dadurch gekennzeichnet, dass** der elektrische Puls (E) aufrechterhalten wird, bis der Vorratsdruck (B) in der Bremsanlage einen definierten Grenzwert (PG) überschreitet.

4. Verfahren nach Anspruch 1, **dadurch gekennzeichnet, dass** das RtR-Ventil (15) erst dann durch den elektrischen Puls (E) angesteuert wird, wenn der Vorratsdruck (B) in der Bremsanlage einen definierten Grenzwert (PG) überschreitet.

5. Verfahren nach einem der Ansprüche 2-4, **dadurch gekennzeichnet, dass** der definierte Grenzwert (PG) aus einer Druckdifferenz (dP) zum Überströmdruck (PÜ) berechnet wird, mit
   Grenzwert (PG) = Überströmdruck (PÜ) plus Druckdifferenz (dP).

6. Verfahren nach Anspruch 5, **dadurch gekennzeichnet, dass** die Druckdifferenz (dP) 0,2 bar bis 1,3 bar beträgt.

7. Verfahren nach Anspruch 5 oder 6, **dadurch gekennzeichnet, dass** die Druckdifferenz (dP) 0,4 bar bis 1 bar beträgt.

8. Verfahren nach einem der Ansprüche 5-7, **dadurch gekennzeichnet, dass** die Druckdifferenz (dP) 0,5 bar beträgt.

9. Verfahren nach Anspruch 2, **dadurch gekennzeichnet, dass** der elektrische Puls (E) mit einem Pulsabstand von 10 s bis 20 s wiederholt wird.

10. Verfahren nach einem der Ansprüche 2 und 9, **dadurch gekennzeichnet, dass** der elektrische Puls (E) mit einem Pulsabstand von 15 s wiederholt wird

11. Verfahren nach einem der Ansprüche 1-10, **dadurch gekennzeichnet, dass** der elektrische Puls (E) eine Pulsdauer von 2 s bis 10 s aufweist.

12. Verfahren nach einem der Ansprüche 1-11, **dadurch gekennzeichnet, dass** der elektrische Puls (E) eine Pulsdauer von 5 s aufweist.

13. Steuergerät (10) mit einem elektrischen Ausgang (20a) zur Abgabe eines elektrischen Pulses (E) zum Auslösen eines manuell betätigbaren RtR-Ventils (15), wobei das RtR-Ventil (15) durch das Auslösen aus einer Nicht-Fahrstellung in eine Fahrstellung zurückkehrt, mit einem Computerprogramm zur Durchführung des Verfahrens nach einem der Ansprüche 1-12.

14. Druckluftsystem (11) für ein Anhängefahrzeug mit pneumatischer Bremsanlage und Geschwindigkeitsgeber, wobei

   - ein manuell betätigbares, elektropneumatisch auslösbares RtR-Ventil (15) vorgesehen ist,
   - das RtR-Ventil (15) durch das Auslösen aus einer Nicht-Fahrstellung in eine Fahrstellung zurückkehrt
   - und das RtR-Ventil (15) zum Auslösen desselben durch einen elektrischen Puls (E) ansteuerbar ist,

   **dadurch gekennzeichnet, dass** das Druckluftsystem getrennte Vorratsbehälter (12, 13) für die Bremsanlage und für das Luftfedersystem (11), Druckgeber für Bremsen-Vorratsdruck und ein Steuergerät (10) nach Anspruch 13 aufweist, wobei Luft aus dem Vorratsbehälter (13) für die Bremsanlage nur nach Erreichen eines Überströmdrucks in den Vorratsbehälter (12) des Luftfedersystems (11) strömt und nur der Vorratsbehälter (12) des Luftfedersystems (11) Luft zum Auslösen des RtR-Ventils (15) zur Verfügung stellt.

15. Anhängefahrzeug mit einem Druckluftsystem (11) nach Anspruch 14.

**Claims**

1. Method for electropneumatically triggering a manually operable RtR valve (15) in a trailer vehicle comprising a pneumatic braking system and an air suspension system (11), wherein

   - the RtR valve (15) returns from a non-driving position to a driving position by being triggered,
   - and the RtR valve (15), in order to be triggered, is activated by an electrical pulse (E) when the vehicle has reached a minimum speed as the speed increases,

   **characterized in that** the trailer vehicle comprises separate reservoirs (12, 13) for the braking system and for the air suspension system, **in that** compressed air from the reservoir (13) for the braking system flows into the reservoir (12) of the air suspension system (11) only after an overflow pressure has been reached and only the reservoir (12) of the air suspension system (11) provides compressed air for triggering the RtR valve (15), **and in that** the RtR valve is triggered on the basis of the minimum speed and a reservoir pressure (B) in the braking system.

2. Method according to claim 1, **characterized in that** the electrical pulse (E) is repeated until the reservoir pressure (B) in the braking system exceeds a defined threshold value (PG).

3. Method according to claim 1, **characterized in that** the electrical pulse (E) is maintained until the reservoir pressure (B) in the braking system exceeds a defined threshold value (PG).

4. Method according to claim 1, **characterized in that** the RtR valve (15) is activated by the electrical pulse (E) only when the reservoir pressure (B) in the braking system exceeds a defined threshold value (PG).

5. Method according to any of claims 2-4, **characterized in that** the defined threshold value (PG) is calculated from a pressure difference (dP) with respect to the overflow pressure (PÜ), where

threshold value (PG) = overflow pressure (PÜ) plus pressure difference (dP).

6. Method according to claim 5, **characterized in that** the pressure difference (dP) is 0.2 bar to 1.3 bar.

7. Method according to either claim 5 or claim 6, **characterized in that** the pressure difference (dP) is 0.4 bar to 1 bar.

8. Method according to any of claims 5-7, **characterized in that** the pressure difference (dP) is 0.5 bar.

9. Method according to claim 2, **characterized in that** the electrical pulse (E) is repeated at a pulse interval of 10 s to 20 s.

10. Method according to either of claims 2 and 9, **characterized in that** the electrical pulse (E) is repeated at a pulse interval of 15 s

11. Method according to any of claims 1-10, **characterized in that** the electrical pulse (E) has a pulse duration of 2 s to 10 s.

12. Method according to any of claims 1-11, **characterized in that** the electrical pulse (E) has a pulse duration of 5 s.

13. Control device (10) having an electrical output (20a) for emitting an electrical pulse (E) in order to trigger a manually operable RtR valve (15), wherein the RtR valve (15) returns from a non-driving position to a driving position by being triggered, comprising a computer program for carrying out the method according to any of claims 1-12.

14. Compressed air system (11) for a trailer vehicle having a pneumatic braking system and a speed sensor, wherein

 - a manually operable, electropneumatically triggerable RtR valve (15) is provided,
 - the RtR valve (15) returns from a non-driving position to a driving position by being triggered
 - and the RtR valve (15), in order to be triggered, can be activated by an electrical pulse (E),

**characterized in that** the compressed air system has separate reservoirs (12, 13) for the braking system and for the air suspension system (11), pressure sensors for brake reservoir pressure and a control device (10) according to claim 13, wherein air from the reservoir (13) for the braking system flows into the reservoir (12) of the air suspension system (11) only after an overflow pressure has been reached and only the reservoir (12) of the air suspension system (11) provides air for triggering the RtR valve (15).

15. Trailer vehicle comprising a compressed air system (11) according to claim 14.

**Revendications**

1. Procédé de déclenchement électropneumatique d'une soupape RtR (15) à actionnement manuel dans un véhicule tracté comportant un dispositif de freinage pneumatique et un système de suspension à air (11), dans lequel

 - la soupape RtR (15) revient d'une position d'arrêt à une position de marche sous l'effet du déclenchement,
 - et, pour être déclenchée, la soupape RtR (15) est commandée par une impulsion (E) électrique lorsque le véhicule a atteint une vitesse minimale à mesure que la vitesse augmente,

**caractérisé en ce que** le véhicule tracté comprend des réservoirs de stockage (12, 13) séparés pour le dispositif de freinage et pour le système de suspension à air, **en ce que** de l'air comprimé ne s'écoule du réservoir de stockage (13) pour le dispositif de freinage dans le réservoir de stockage (12) du système de suspension à air (11) qu'après avoir atteint une pression de trop-plein, et seul le réservoir de stockage (12) du système de suspension à air (11) fournit de l'air comprimé permettant de déclencher la soupape RtR (15), **et en ce que** la soupape RtR est déclenchée en fonction de la vitesse minimale et d'une pression de réserve (B) dans le dispositif de freinage.

2. Procédé selon la revendication 1, **caractérisé en ce que** l'impulsion (E) électrique est répétée jusqu'à ce que la pression de réserve (B) dans le dispositif de freinage dépasse une valeur limite (PG) définie.

3. Procédé selon la revendication 1, **caractérisé en ce que** l'impulsion (E) électrique est maintenue jusqu'à ce que la pression de réserve (B) dans le dispositif de freinage dépasse une valeur limite (PG) définie.

**4.** Procédé selon la revendication 1, **caractérisé en ce que** la soupape RtR (15) n'est commandée par l'impulsion (E) électrique que lorsque la pression de réserve (B) dans le dispositif de freinage dépasse une valeur limite (PG) définie.

**5.** Procédé selon l'une des revendications 2 à 4, **caractérisé en ce que** la valeur limite (PG) définie est calculée à partir d'une différence de pression (dP) par rapport à la pression de trop-plein (PÜ), avec
valeur limite (PG) = pression de trop-plein (PÜ) plus différence de pression (dP).

**6.** Procédé selon la revendication 5, **caractérisé en ce que** la différence de pression (dP) va de 0,2 bar à 1,3 bar.

**7.** Procédé selon la revendication 5 ou 6, **caractérisé en ce que** la différence de pression (dP) va de 0,4 bar à 1 bar.

**8.** Procédé selon l'une des revendications 5 à 7, **caractérisé en ce que** la différence de pression (dP) est de 0,5 bar.

**9.** Procédé selon la revendication 2, **caractérisé en ce que** l'impulsion (E) électrique est répétée avec un intervalle entre impulsions allant de 10 s à 20 s.

**10.** Procédé selon l'une des revendications 2 et 9, **caractérisé en ce que** l'impulsion (E) électrique est répétée avec un intervalle entre impulsions de 15 s

**11.** Procédé selon l'une des revendications 1 à 10, **caractérisé en ce que** l'impulsion (E) électrique présente une durée d'impulsion allant de 2 s à 10 s.

**12.** Procédé selon l'une des revendications 1 à 11, **caractérisé en ce que** l'impulsion (E) électrique présente une durée d'impulsion de 5 s.

**13.** Appareil de commande (10) comportant une sortie (20a) électrique destinée à délivrer une impulsion (E) électrique permettant de déclencher une soupape RtR (15) à actionnement manuel, dans lequel la soupape RtR (15) revient d'une position d'arrêt à une position de marche sous l'effet du déclenchement, comportant un programme informatique permettant de mettre en oeuvre le procédé selon l'une des revendications 1 à 12.

**14.** Système d'air comprimé (11) pour un véhicule tracté comportant un dispositif de freinage pneumatique et un capteur de vitesse, dans lequel

- il est prévu une soupape RtR (15) à déclenchement électropneumatique et à actionnement manuel,
- la soupape RtR (15) revient d'une position d'arrêt à une position de marche sous l'effet du déclenchement
- et, pour être déclenchée, la soupape RtR (15) peut être commandée par une impulsion (E) électrique,

**caractérisé en ce que** le système d'air comprimé comprend des réservoirs de stockage (12, 13) séparés pour le dispositif de freinage et pour le système de suspension à air (11), un capteur de pression pour la pression de réserve des freins et un appareil de commande (10) selon la revendication 13, dans lequel l'air ne s'écoule du réservoir de stockage (13) pour le dispositif de freinage dans le réservoir de stockage (12) du système de suspension à air (11) qu'après avoir atteint une pression de trop-plein, et seul le réservoir de stockage (12) du système de suspension à air (11) fournit de l'air permettant de déclencher la soupape RtR (15).

**15.** Véhicule tracté comportant un système d'air comprimé (11) selon la revendication 14.

Fig. 1

EP 4 209 367 B1

Fig. 2

Fig. 3

EP 4 209 367 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3643543 B1

- DE 102010011433 A1